# EUROPEAN PATENT SPECIFICATION

(11) **EP 3 048 580 B1**
(45) Date of publication and mention of the grant of the patent: **29.11.2017**
(21) Application number: 15382008.9
(22) Date of filing: 20.01.2015
(51) Int. Cl.: G06T 7/11, G06T 7/149, G06T 7/187

(54) **METHOD OF EXTRACTING THE OPTIC DISC OF A RETINAL IMAGE**
VERFAHREN ZUR EXTRAKTION DER OPTISCHEN BILDPLATTE EINES RETINA-BILDES
PROCÉDÉ D'EXTRACTION DU DISQUE OPTIQUE D'UNE IMAGE RÉTINIENNE

(43) Date of publication of application: 27.07.2016
(73) Proprietor: Ulma Innovacion, S.L., 20560 Onati (ES); Idiap Jordi Gol I Gurina, 08007 Barcelona (ES)
(72) Inventor: Beristain Iraola, Andoni, 20800 ZARAUTZ (ES); Barandiaran Martirena, Iñigo, 20016 SAN SEBASTIAN (ES); Tamurejo Colorado, Noelia, 13500 PUERTOLLANO (ES)
(74) Representative: Igartua, Ismael

(56) References cited:
- Jaspreet Kaur ET AL: "Automated Localisation of Optic Disc and Macula from Fundus Images", International Journal of Advanced Research in Computer Science and Software Engineering, 1 April 2012 (2012-04-01), pages 242-249, XP055207824, Retrieved from the Internet: URL:http://www.ijarcsse.com/docs/papers/Ap ril2012/Volume_2_issue_4/V2I400117.pdf [retrieved on 2015-08-14]
- Irene Fondón ET AL: "Automatic Cup-to-Disc Ratio Estimation Using Active Contours and Color Clustering in Fundus Images for Glaucoma Diagnosis" In: "LECTURE NOTES IN COMPUTER SCIENCE", 1 January 2012 (2012-01-01), Springer Berlin Heidelberg, Berlin, Heidelberg, XP055207827, ISSN: 0302-9743 ISBN: 978-3-54-045234-8 vol. 7325, pages 390-399, DOI: 10.1007/978-3-642-31298-4_46, * abstract * * Section 2.5 Color Clustering *
- G.G. RAJPUT ET AL: "Detection and Classification of Exudates Using K-Means Clustering in Color Retinal Images", 2014 FIFTH INTERNATIONAL CONFERENCE ON SIGNAL AND IMAGE PROCESSING, 1 January 2014 (2014-01-01), pages 126-130, XP055207831, DOI: 10.1109/ICSIP.2014.25 ISBN: 978-0-76-955100-5
- MUHAMMAD SALMAN HALEEM ET AL: "Automatic extraction of retinal features from colour retinal images for glaucoma diagnosis: A review", COMPUTERIZED MEDICAL IMAGING AND GRAPHICS, vol. 37, no. 7-8, 1 October 2013 (2013-10-01), pages 581-596, XP055207835, ISSN: 0895-6111, DOI: 10.1016/j.compmedimag.2013.09.005

## Description

### TECHNICAL FIELD

The present invention relates to a method of extracting the optic disc of a retinal image.

### PRIOR ART

The retina is an anatomical region where images of the capillaries can be obtained directly, providing enormous opportunities for the *in vivo* study of the structure of human circulation, as well as the possibility of detecting microvascular anomalies related to the development of diseases, for example, cardiovascular diseases.

The optic disc is where the nerve fibers forming the optic nerve are concentrated, being the point of exit of said optic nerve towards the brain. The optic disc also represents the point of entry and exit of the vascular tree irrigating retinal cells. Locating and segmenting the optic disc is an important part of the anatomical characteristics that are present in an image of the fundus of the eye.

Several methods of detecting and segmenting the optic disc are known. For example, patent document WO2011022783A1 discloses a method for detecting the optic disc in a retinal image. This method firstly defines a histogram to determine the intensity levels of the pixels of the image and establishes an intensity threshold which may correspond to the optic disc region. Then it calculates the number of pixels for each potential region that may contain the optic disc and determines the center of each region by means of the Hough transform. It chooses the optic disc region depending on the number of pixels and the center of the regions and applies a region growing algorithm to segment the optic disc.

Document *"*Automatic Cup-to-Disc Ratio Estimation Using Active Contours and Color Clustering in Fundus Images for Glaucoma Diagnosis", LECTURE NOTES IN COMPUTER SCIENCE, 1 January 2012*,* discloses an automatic technique for the segmentation of the optic disc and the optic cup. To segment the optic disc, information of the green channel is used, and the optic disc centre is localized considering that the intensity variation must be the highest in the image. Once the centre is localized a region-based active contour process is applied to find a first approximation of the optic disc and finally morphological techniques are used to obtain the final optic disc. Once the optic disc is isolated a segmentation method based on color information is used to identify the cup area from the rest of the elements by searching the brightest yellow pixels within the optic disc. CIE color space is used because the distance measures are correlated with the perceived color differences.

Document *"*Automated Localisation of Optic Disc and Macula from Fundus Images", International Journal of Advanced Research in Computer Science and Software Engineering, 1 April 2012*,* discloses a method of extracting the optic disc of a retinal image, comprising a step of localization the optic disc and a step of detecting the optic disc boundary.

The step of localization the optic disc comprises the following sub-steps:
- a sub-step of selection of Initial Threshold wherein a method based on the approximation of the histogram of the retinal image using a weighted sum of two or more probability densities with normal distribution is used for initial thresholding of the retinal imagen. Histogram information derived from the source image is used to partition the brightest regions of the background. Only green channel information is used for calculating the optimal threshold. This sub-step results in several connected components,
- a sub-step of estimation the optic disc centre, wherein the component having the maximum number of pixels is assumed to be having the optic cup part, and components close to said connect component are merged with it until the region is equal of greater than 1.8 mm. An ellipse is drawn to indicate the location of optic disc with its approximate centre.

### DISCLOSURE OF THE INVENTION

The object of the invention is to provide a method of extracting the optic disc of a retinal image, as described in the claims.

The method of extracting the optic disc of the invention comprises a step of finding the approximate location of the optic disc in which an area comprising at least part of the optic disc is defined, and a step of segmenting the optic disc in which the contour of the region comprising the optic disc is obtained based on the area defined in the step of finding the approximate location, where said area is adapted to or approximates the morphology of the optic disc.

The step of finding the approximate location of the optic disc comprises a plurality of sub-steps described in detail below.

In this sense, it comprises a sub-step of generating an image in the CIE color space in which the RGB retinal image is converted to the CIE color space, preferably to the CIE 1976 L*a*b* color space. The RGB color space does not provide a metric difference between colors corresponding to the perception of the human eye. The CIE color space allows colors perceived as similar by the human eye to have a smaller Euclidean distance than colors perceived as different. In other words, the Euclidean distance between two colors in the CIE space is a metric difference between colors corresponding to the perception of the human eye. Furthermore, unlike other color spaces, such as the use of angular components in spherical coordinates or the use of the HS subspace within HSV, the difference between colors also considers the lightness thereof, an important visual criterion for distinguishing the optic disc from the remaining structures in a fundus photography image.

In another sub-step, pixels of the image in the CIE color space are classified in n categories depending on the color similarity of said pixels. Pixels of similar colors therefore belong to the same category, without taking into account the spatial position of said pixels. In other words, if two pixels have the same tone, such as a pixel of the optic disc and a pixel of an exudate, for example, they belong to the same category even though they may be spatially arranged far apart from one another within the retinal image.

Once the n categories are generated, at least one of the categories of pixels that is considered to comprise at least part of the pixels of the optic disc is selected. The candidate category is selected as follows. The K-Means algorithm provides the representative color for each of the categories. Each representative color is converted to the RGB color space. Once this conversion is performed, the candidate color the value of which is maximum in the green channel of the RGB color space is selected.

In another sub-step, a combined binary image is generated for all the selected categories of pixels or a different binary image is generated for each of the selected categories of pixels, in which the pixels of said at least one selected category are one color, preferably white, and the rest of the pixels are another color, preferably black. Based on the previously described binary image or images, the sub-step of extracting connected components is performed, in which the pixels of the selected category or categories connected to one another are clustered.

In another sub-step, the candidate connected component is selected taking into account different parameters such as shape, size and position, for example. Once the candidate connected component is selected, the center and the area of said component is obtained.

In another sub-step, the candidate area with a center in the center of the candidate connected component and a radius proportional to the radius of the candidate connected component is defined.

The method of extracting the optic disc of the invention provides a reliable and precise alternative method of extracting the optic disc.

These and other advantages and features of the invention will become evident in view of the drawings and detailed description of the invention.

### DESCRIPTION OF THE DRAWINGS

Figure 1 shows a flowchart of the method of extracting the optic disc according to one embodiment of the invention.
Figure 2 shows a starting retinal image by way of example.
Figure 3 shows an image in which the connected components corresponding to the image of Figure 2 are shown.
Figure 4 shows the probability image corresponding to the image of Figure 2.
Figure 5 shows an image of the candidate area on Figure 4.
Figure 6 shows the optic disc extracted based on Figure 5.

### DETAILED DISCLOSURE OF THE INVENTION

The method of extracting the optic disc of the invention comprises a step of finding the approximate location of the optic disc in which an area comprising at least part of the optic disc is defined, and a step of segmenting the optic disc in which the contour of the region comprising the optic disc is obtained based on the area defined in the step of finding the approximate location. In this embodiment, the retinal image to be analyzed is an image captured in color and in the RGB color space, preferably with a resolution greater than 320 x 240 pixels. The image is captured such that the optic disc is in the center of the image or located at the left or right end of the image. Furthermore, the field of vision and the image capture protocol make the resulting image show the optic disc in its entirety, as well as the main vessels and their branches along the optic nerve. The images include a black border, i.e., RGB = (0,0,0), limiting the capture region of the fundus camera, because the region to be captured tends to be circular, but the digital images generated are rectangular. In other embodiments, the image to be analyzed can have other features.

The step of finding the approximate location of the optic disc comprises a plurality of sub-steps. The sequence of sub-steps according to this first embodiment is described below.

The sequence of sub-steps is non-limiting, being able to include other additional intercalated sub-steps in other embodiments, or being able to perform any of the defined sub-steps in a different order.

Optionally, to help apply subsequent sub-steps, the step of finding the approximate location can comprise a first sub-step of conditioning the retinal image. First, a subsampling of the retinal image is performed on one hand for reducing image resolution so that treatment thereof is quicker, and on the other hand for smoothing the image to reduce minor local variations in pixel intensity and tone, and therefore eliminate, or at least mitigate, noise due to the image capture process. In this embodiment, the method used is called Gaussian Pyramids, which combines scaling the image to half in each dimension and iteration, with the Gaussian smoothing, other methods of smoothing and/or scaling known by a person skilled in the art being able to be used in other embodiments.

Scaling along with smoothing the image allows eliminating part of the noise in the image and reduces and limits the maximum computational cost. Use of the image in color with a reduced number of colors in the image using the clustering algorithm improves detection in dark images and where the color temperature is variable, compared to techniques based on use of the green channel directly.

Furthermore, and though not intrinsically part of this algorithm, after the sub-step of conditioning, automatic detection of which pixels belong to the retina and of which pixels belong to the fundus is performed. This identification allows establishing a mask that is applied to the retinal image, obtaining an image in which the fundus pixels are defined as black pixels. Therefore, only retina pixels will be analyzed in subsequent sub-steps, such that said sub-steps can be accelerated because the number of pixels to be treated is less and mistakes can be avoided, mistakes caused, for example, by characters that may exist in the background of the image. This mask can also be obtained manually.

The sub-step of conditioning provides a simplified, easier-to-treat retinal image. As mentioned above, the sub-step of conditioning is optional, so in other embodiments the sub-steps defined below could be performed directly on the retinal image without conditioning it.

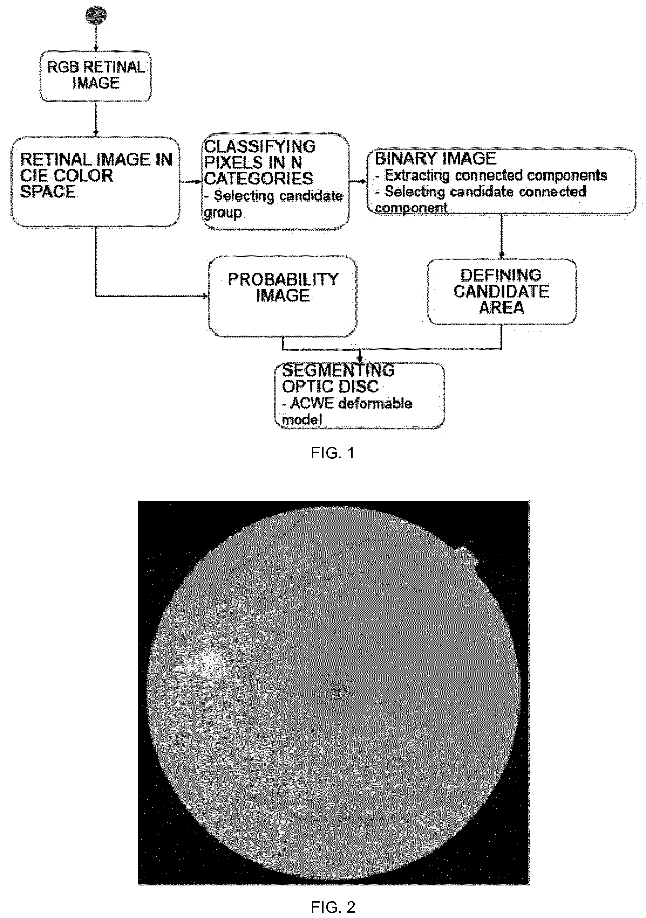

In this embodiment, in the next sub-step, a retinal image in the CIE color space is generated based on the simplified retinal image, which is an image in RGB, as shown in Figure 1.

To that end, an algorithm is applied in which the simplified retinal image in RGB is converted to the CIE color space; in this specific embodiment, it is converted to CIE 1976 L*a*b* color space. In other embodiments, the image can be converted to other color spaces, for example, CIE XYZ or Hunter Lab.

The algorithm for converting an image from RGB to CIE 1976 L*a*b* is well-known for a person skilled in the art. This conversion is performed because in the next sub-steps pixel color distances and averages must be calculated, and in the RGB color space such distances and averages do not have any direct correspondence with the color perception of the human eye. With conversion to CIE 1976 L*a*b* color space, the Euclidean distance has a greater correspondence with the color difference perceived by the human eye than in the RGB space, such that two colors in CIE 1976 L*a*b* the Euclidean distance of which is large will be very different, and two colors with a small Euclidean distance will be very similar. An alternative metric to Euclidean distance for measuring color difference in CIE, called CIE94, is also known. This metric is based on the Euclidean distance and provides a more consistent and precise difference measurement, although it considerably increases the complexity and computational cost of the algorithm.

Then the pixels of the CIE 1976 L*a*b* image are classified in n categories depending on the color similarity of said pixels. Pixels of similar colors therefore belong to the same category, without taking into account the spatial position of said pixels. In other words, if two pixels have the same tone, such as a pixel of the optic disc and a pixel of an exudate, for example, they belong to the same category even though they may be spatially arranged far apart from one another within the retinal image.

In this embodiment, automatic classification of the pixels of the CIE 1976 L*a*b* image in n categories is based on a criterion of color similarity of said pixels using the automatic clustering algorithm. Among the different existing algorithms, K-Means combined with an automatic centroid initialization method of the state of the art, for example, the algorithm defined in *"K-means*++*: the advantages of careful seeding,* Arthur & S. Vassilvitskii, Proceedings of the eighteenth annual ACM-SIAM symposium on Discrete algorithms, 2007*",* has been used given its good ratio with respect to computational complexity and result quality/stability. By using this algorithm, pixels of similar colors, i.e., pixels having a small Euclidean distance from one another, belong to the same category, without taking into account the spatial position of said pixels. In other words, if two pixels have similar tones, such as a pixel of the optic disc and a pixel of an exudate, for example, they belong to the same category even though they may be spatially arranged far apart from one another within the retinal image. In other embodiments, other algorithms such as K-Medoids, K-Medians, Fuzzy K-Means, etc., can be used

In this particular embodiment, pixels are classified in 12 categories. It has been found that classifying pixels in 12 categories provides a good balance between the detection quality and the amount of computation. In other embodiments, techniques known for automatically estimating this value applicable to K-Means, for example, X-Means, can be used.

Once the pixels are classified in n categories, the category of pixels that is considered to comprise at least part of the pixels of the optic disc, called candidate category, is selected. In this first embodiment, the candidate category is selected as follows. Once the n categories are generated, the K-Means algorithm provides the representative color for each of the categories. Each representative color is converted to the RGB color space. Once this conversion is performed, the candidate color the value of which is maximum in the green channel of the RGB color space is selected. It is known that the optic disc, together with an exudate type pathology in the event that there are any, has the brightest values in fundus photography and that they are more visible in the green channel of the RGB color space.

Then a binary image is generated in which the pixels of the selected category are one color and the rest of the pixels are another color. In this first embodiment, the pixels of the selected category are white and the rest of the pixels are black.

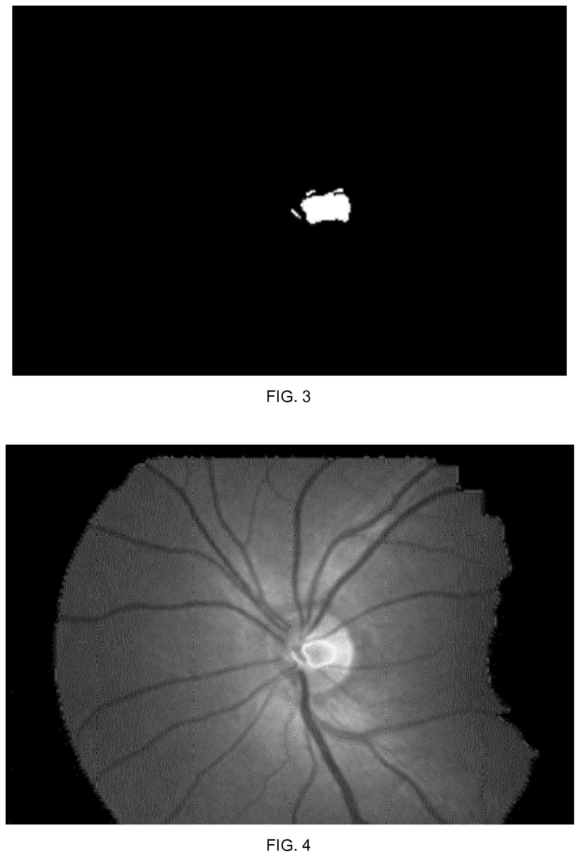

Detection of connected components is performed based on the binary image, in which the pixels of the binary image of the color of the candidate category close to one another are clustered. In this embodiment, a criterion of spatial connectivity, i.e., if a white pixel is arranged next to another white pixel they are considered to be of the same component, is used to cluster the pixels. The result of this method consists of a plurality of connected components, i.e., the sequence of pixels forming the contour of each component, one of the connected components being representative of the optic disc. Figure 3 shows an image in which the connected components corresponding to the retinal image of Figure 2 are observed.

In other possible embodiments, more than one candidate category can be selected. A combined binary image or an individual binary image can be generated for each selected category based on the candidate categories. The connected components are then extracted from said combined image or said individual images. The subsequent process is similar to that of the described embodiment.

To select the candidate connected component, different parameters are taken into account, such as the shape, area and position of the connected components for example.

Once the candidate connected component is selected, its area and center of mass are obtained. Furthermore, the approximate radius is defined based on the area of the candidate connected component, considering that it tends to be a circular shape.

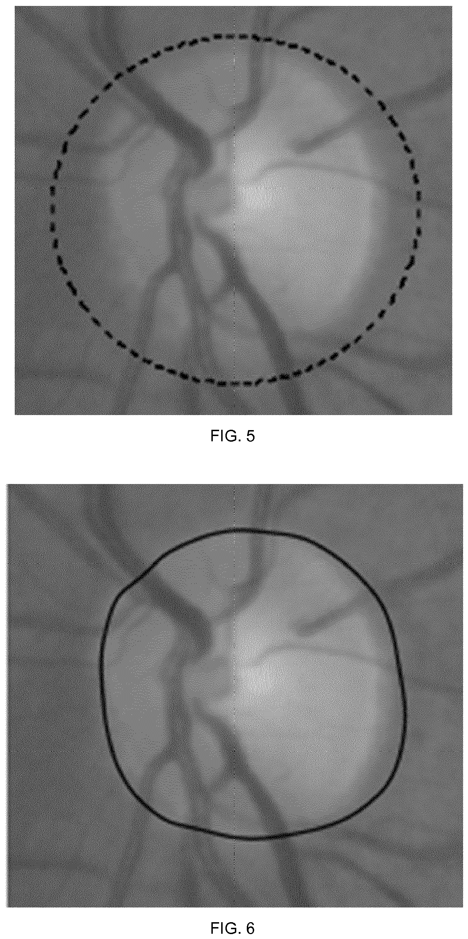

Finally, the candidate area is defined, with a center in the center of the candidate connected component and a radius proportional to the radius of the candidate connected component, as shown in Figure 5. The radius of the candidate area is preferably equivalent to twice the radius of the candidate connected component.

In this embodiment, the candidate area is defined on a probability image. The probability image is a grayscale image generated from the retinal image in the CIE 1976 color space. The gray value assigned to each pixel is the difference, i.e., the Euclidean distance, between said pixel and the representative color of the candidate category. In low contrast images in which the probability image will in turn have a low contrast, an increase thereof can be performed using conventional image processing techniques, which will improve the results of the next step of segmenting the optic disc. Once the candidate area is defined in the grayscale image, the step of segmenting the optic disc is performed. A deformable model algorithm is used to that end in this first embodiment. Specifically, the deformable model algorithm used is known as ACWE (Active Contour Without Edges), although a different one could be used. In this step, the candidate area is adapted to or approximates the morphology of the optic disc. To that end, it requires an initial region, obtained from the center and approximate radius of the step of approximate segmentation, and an energy function which controls the extension and/or compression of the initial region in each iteration of the algorithm. In this case, the energy function is determined by the probability image. The algorithm converges when a stable energy situation is reached. Figure 6 shows an image in which the contour of the optic disc is observed.

In another embodiment, the step of finding the approximate location of the optic disc comprises an additional sub-step in which the vascular tree is extracted from the retinal image.

As mentioned above, retinal image analysis is used in the detection of a plurality of diseases. Extraction of the optic disc is necessary in most of these retinal image analyses because it is an important characteristic of retinal images.

A relevant parameter that can be calculated upon analyzing a retinal image is the arteriolar-to-venular ratio which, for example, could allow determining the likelihood of suffering, or of having suffered, a silent stroke.

One embodiment of a method for calculating said arteriolar-to-venular ratio in a retinal image comprises a step in which the optic disc is extracted according to the method of the invention. In another step, the vascular tree is extracted and segmented and vessels are identified as veins and arteries. Finally, the arteriolar-to-venular ratio AVR is calculated. The AVR ratio is preferably calculated with values obtained in a ring equivalent to 2R-3R, R being the radius of the optic disc. In other embodiments, the area of calculation can be a different one. Furthermore, the step of extracting the optic disc and the step of extracting the vascular tree can be done in a different order.

Other aspects of the invention relate to computer software comprising the source code for carrying out the method described above, a web application comprising the source code for carrying out the method described above, the use of the method of calculating the arteriolar-to-venular ratio for the diagnosis, prevention and/or follow-up of different diseases, preferably cerebrovascular diseases, silent cerebral ischemia, Alzheimer's disease, dementia, multiple sclerosis or arterial hypertension, and the use of the method of extracting the disc for the diagnosis, prevention and/or follow-up of different ocular diseases related to vision loss and blindness, preferably diabetic retinopathy, hypertensive retinopathy, glaucoma or age-related macular degeneration.

## Claims

1. Method of extracting the optic disc of a retinal image, comprising at least the following steps:
- a step of finding the approximate location of the optic disc in which an area comprising at least part of the optic disc is defined, and
- a step of segmenting the optic disc in which the contour of the region comprising the optic disc is obtained based on the area defined in the step of finding the approximate location, where said area is adapted to or approximates the morphology of the optic disc, wherein
- the step of finding the approximate location of the optic disc comprises at least the following sub-steps:
▪ generating an image in CIE color space in which the RGB retinal image is converted to the CIE color space;
▪ classifying the pixels of the CIE image in n categories depending on the color similarity of said pixels;
▪ selecting at least one of the categories of pixels that is considered to comprise at least part of the pixels of the optic disc based on
- calculating the representative color of each category;
- converting said representative colors to the RGB space; and
- selecting at least the category the representative color of which has the maximum value of the green channel;
▪ generating a combined binary image or a different binary image for each of the selected categories of pixels, in which the pixels of the selected category are one color, preferably white, and the rest of the pixels are another color, preferably black;
▪ extracting connected components based on the binary image or images in which the pixels of the selected category connected to one another are clustered;
▪ selecting the candidate connected component taking into account different parameters such as shape, size and position, for example;
▪ obtaining the center and the radius of the candidate connected component; and
▪ defining the candidate area to being the optic disc with a center in the center of the candidate connected component and a radius proportional to the radius of the candidate connected component.

2. Method according to the preceding claim, wherein the CIE color space corresponds to the CIE 1976 color space.

3. Method according to any of the preceding claims, wherein the pixels of the CIE image are classified in n categories using the K-Means algorithm using the Euclidean distance in this color space.

4. Method according to any of the preceding claims, wherein n is 12.

5. Method according to any of the preceding claims, wherein the step of segmenting the optic disc comprises a sub-step in which a grayscale image is generated based on the CIE image.

6. Method according to claim 5, wherein the gray value assigned to each pixel is proportional to the difference with respect to the representative color of said at least one candidate category.

7. Method according to any of the preceding claims, wherein the step of segmenting the optic disc uses deformable models.

8. Method according to the preceding claim, wherein the deformable model used is ACWE (Active Contour without Edges).

9. Method according to any of the preceding claims, wherein the step of finding the approximate location of the optic disc comprises a sub-step in which the vascular tree is extracted from the retinal image.

10. Method of calculating the arteriolar-to-venular ratio AVR in a retinal image comprising at least the following steps:
- a step of extracting the optic disc according to any of the preceding claims,
- a step of extracting and segmenting the vascular tree,
- a step of identifying vessels as veins and arteries, and
- a step of calculating the arteriolar-to-venular ratio AVR.

11. Computer software comprising the source code for carrying out the method described in any of the preceding claims.

12. Web application comprising the source code for carrying out the method described in any of claims 1 to 10.

13. Use of the method of calculating the arteriolar-to-venular ratio according to claim 10, for the diagnosis, prevention and/or follow-up of different diseases, preferably cerebrovascular diseases, silent cerebral ischemia, Alzheimer's disease, dementia, multiple sclerosis or arterial hypertension.

14. Use of the method of extracting the optic disc according to any of claims 1 to 9 for the diagnosis, prevention and/or follow-up of ocular diseases related to vision loss and blindness, preferably diabetic retinopathy, hypertensive retinopathy, glaucoma or age-related macular degeneration.

## Patentansprüche

1. Verfahren zur Extraktion der Sehnervpapille aus einem Netzhautbild, zumindest die folgenden Schritte umfassend:
- einen Schritt des Feststellens der ungefähren Position der Sehnervpapille, bei dem ein Bereich definiert wird, der zumindest einen Teil der Sehnervpapille umfasst, und
- einen Schritt des Segmentierens der Sehnervpapille, bei dem der Umriss der Region, welche die Sehnervpapille umfasst, basierend auf dem Bereich erhalten wird, der im Schritt des Feststellens der ungefähren Position definiert wurde, wobei der Bereich an die Morphologie der Sehnervpapille angepasst ist oder dieser angenähert ist,
wobei
- der Schritt des Feststellens der ungefähren Position der Sehnervpapille zumindest die folgenden Unterschritte umfasst:
▪ Erzeugen eines Bildes im CIE-Farbraum, in dem das RGB-Netzhautbild in den CIE-Farbraum umgewandelt wird;
▪ Klassifizieren der Pixel des CIE-Bildes in n Kategorien in Abhängigkeit von der Farbähnlichkeit der Pixel;
▪ Auswählen zumindest einer der Kategorien von Pixeln, von der angenommen wird, dass sie zumindest einen Teil der Pixel der Sehnervpapille umfasst, basierend auf
- einer Berechnung der repräsentativen Farbe jeder Kategorie;
- einer Umwandlung der repräsentativen Farben in den RGB-Raum; und
- einer Auswahl zumindest jener Kategorie, deren repräsentative Farbe den maximalen Wert des grünen Kanals aufweist;
▪ Erzeugen eines kombinierten binären Bildes oder eines anderen binären Bildes für jede der ausgewählten Kategorien von Pixeln, wobei die Pixel der ausgewählten Kategorie eine Farbe, vorzugsweise weiß, aufweisen und der Rest der Pixel eine andere Farbe, vorzugsweise schwarz, aufweist.
▪ Extrahieren von verbundenen Komponenten basierend auf dem/den binären Bild oder Bildern, in denen die Pixel der ausgewählten Kategorie, die miteinander verbunden sind, gebündelt sind;
▪ Auswählen der verbundenen Kandidatenkomponente unter Berücksichtigung verschiedener Parameter wie beispielsweise Größe, Form und Position;
▪ Erhalten des Zentrums und des Radius der verbundenen Kandidatenkomponente; und
▪ Definieren des Kandidatenbereichs als Sehnervpapille mit einem Zentrum im Zentrum der verbundenen Kandidatenkomponente und einem Radius proportional zum Radius der verbundenen Kandidatenkomponente.

2. Verfahren nach dem vorhergehenden Anspruch, wobei der CIE-Farbraum dem CIE-1976-Farbraum entspricht.

3. Verfahren nach einem der vorhergehenden Ansprüche, wobei die Pixel des CIE-Bildes unter Verwendung des K-Means-Algorithmus und unter Verwendung des euklidischen Abstands in diesem Farbraum in n Kategorien klassifiziert werden.

4. Verfahren nach einem der vorhergehenden Ansprüche, wobei n = 12 ist.

5. Verfahren nach einem der vorhergehenden Ansprüche, wobei der Schritt des Segmentierens der Sehnervpapille einen Unterschritt umfasst, bei dem ein Graustufenbild basierend auf dem CIE-Bild erzeugt wird.

6. Verfahren nach Anspruch 5, wobei der Grauwert, der jedem Pixel zugeordnet wird, proportional zum Unterschied in Bezug auf die repräsentative Farbe der zumindest einen Kandidatenkategorie ist.

7. Verfahren nach einem der vorhergehenden Ansprüche, wobei der Schritt des Segmentierens der Sehnervpapille verformbare Modelle nutzt.

8. Verfahren nach dem vorhergehenden Anspruch, wobei das verwendete verformbare Modell ACWE (Active Contour without Edges) ist.

9. Verfahren nach einem der vorhergehenden Ansprüche, wobei der Schritt des Feststellens der ungefähren Position der Sehnervpapille einen Unterschritt umfasst, bei dem der Gefäßbaum aus dem Netzhautbild extrahiert wird.

10. Verfahren zur Berechnung des Arteriolen-Venolen-Verhältnisses AVR in einem Netzhautbild, umfassend zumindest die folgenden Schritte:
- einen Schritt des Extrahierens der Sehnervpapille nach einem der vorhergehenden Ansprüche,
- einen Schritt des Extrahierens und Segmentierens des Gefäßbaums,
- einen Schritt des Identifizierens von Gefäßen als Venen und Arterien und
- einen Schritt des Berechnens des Arteriolen-Venolen-Verhältnisses AVR.

11. Computersoftware, umfassend den Quellcode zur Ausführung des Verfahrens, wie es in einem der vorhergehenden Ansprüche beschrieben ist.

12. Webanwendung, umfassend den Quellcode zur Ausführung des Verfahrens, wie es in einem der Ansprüche 1 bis 10 beschrieben ist.

13. Verwendung des Verfahrens zur Berechnung des Arteriolen-Venolen-Verhältnisses nach Anspruch 10 zur Diagnose, Prävention und/oder Nachverfolgung von verschiedenen Krankheiten, vorzugsweise zerebrovaskulären Krankheiten, stiller zerebraler Ischämie, Alzheimer-Krankheit, Demenz, multipler Sklerose oder arterieller Hypertonie.

14. Verwendung des Verfahrens zur Extraktion der Sehnervpapille nach einem der Ansprüche 1 bis 9 zur Diagnose, Prävention und/oder Nachverfolgung von Augenkrankheiten, die mit Sehverlust und Blindheit zusammenhängen, vorzugsweise von diabetischer Retinopathie, hypertensiver Retinopathie, Glaukomen oder altersbedingter Makuladegeneration.

## Revendications

1. Procédé d'extraction du disque optique d'une image rétinienne, comprenant au moins les étapes suivantes :
- une étape consistant à trouver l'emplacement approximatif du disque optique, dans laquelle une zone comprenant au moins une partie du disque optique est définie et
- une étape consistant à segmenter le disque optique, dans laquelle le contour de la région comprenant le disque optique est obtenu, sur la base de la zone définie dans l'étape consistant à trouver l'emplacement approximatif, ladite zone étant adaptée à ou s'approchant de la morphologie du disque optique,
dans lequel
- l'étape consistant à trouver l'emplacement approximatif du disque optique comprend au moins les étapes secondaires suivantes :
▪ générer une image dans l'espace de couleur CIE, dans laquelle l'image rétinienne RGB est convertie dans l'espace de couleur CIE ;
▪ classifier les pixels de l'image CIE en n catégories en fonction de la similarité de couleur desdits pixels ;
▪ sélectionner au moins une des catégories de pixels qui est considérée comme comprenant au moins une partie des pixels du disque optique, sur la base
- du calcul de la couleur représentative de chaque catégorie ;
- de la conversion desdites couleurs représentatives dans l'espace RGB ; et
- de la sélection de la au moins une catégorie dont la couleur représentative a la valeur maximale du canal vert ;
▪ générer une image binaire combinée ou une image binaire différente pour chacune des catégories de pixels sélectionnées, dans laquelle les pixels de la catégorie sélectionné sont d'une couleur, de préférence blanc, et le reste des pixels est d'une autre couleur, de préférence noir ;
▪ extraire les composantes connectées sur la base de la ou des images binaires dans lesquelles les pixels de la catégorie sélectionnée connectés les uns aux autres sont regroupés ;
▪ sélectionner la composante connectée candidate en prenant en compte différents paramètres tels que la forme, la taille et la position, par exemple ;
▪ obtenir le centre et le rayon de la composante connectée candidate ; et
▪ définir la zone candidate comme étant le disque optique avec un centre dans le centre de la composante connectée candidate et un rayon proportionnel au rayon de la composante connectée candidate.

2. Procédé selon la revendication précédente, dans lequel l'espace de couleur CIE correspond à l'espace de couleur CIE 1976.

3. Procédé selon l'une quelconque des revendications précédentes, dans lequel les pixels des images CIE sont classifiées en n catégories à l'aide de l'algorithme à K moyennes à l'aide de la distance euclidienne dans cet espace de couleur.

4. Procédé selon l'une quelconque des revendications précédentes, dans lequel n est 12.

5. Procédé selon l'une quelconque des revendications précédentes, dans lequel l'étape consistant à segmenter le disque optique comprend une étape secondaire dans laquelle une image en niveaux de gris est générée sur la base de l'image CIE.

6. Procédé selon la revendication 5, dans lequel la valeur de gris attribuée à chaque pixel est proportionnelle à la différence par rapport à la couleur représentative de ladite au moins une catégorie candidate.

7. Procédé selon l'une quelconque des revendications précédentes, dans lequel l'étape consistant à segmenter le disque optique utilise des modèles déformables.

8. Procédé selon la revendication précédente, dans lequel le modèle déformable utilisé est ACWE (contour actif sans bords).

9. Procédé selon l'une quelconque des revendications précédentes, dans lequel l'étape consistant à trouver l'emplacement approximatif du disque optique comprend une étape secondaire dans laquelle l'arbre vasculaire est extrait de l'image rétinienne.

10. Procédé de calcul du rapport artériolaire à veinulaire AVR dans une image rétinienne, comprenant au moins les étapes suivantes :
- une étape d'extraction du disque optique selon l'une quelconque des revendications précédentes,
- une étape d'extraction et de segmentation de l'arbre vasculaire,
- une étape d'identification des vaisseaux comme des veines et artères et
- une étape de calcul du rapport artériolaire à veinulaire AVR.

11. Logiciel informatique comprenant le code source pour réaliser le procédé décrit dans l'une quelconque des revendications précédentes.

12. Application web comprenant le code source pour réaliser le procédé décrit dans l'une quelconque des revendications 1 à 10.

13. Utilisation du procédé de calcul du rapport artériolaire à veinulaire selon la revendication 10, pour le diagnostic, la prévention et/ou le suivi de différentes maladies, de préférence des maladies vasculaires cérébrales, les ischémies cérébrales silencieuses, la maladie d'Alzheimer, la démence, la sclérose en plaques ou l'hypertension artérielle.

14. Utilisation du procédé d'extraction du disque optique selon l'une quelconque des revendications 1 à 9 pour le diagnostic, la prévention et/ou le suivi de maladies oculaires associées à la perte de la vue et la cécité, de préférence la rétinopathie diabétique, la rétinopathie hypertensive, le glaucome ou la dégénérescence maculaire liée à l'âge.
